# NEUE EUROPÄISCHE PATENTSCHRIFT

(11) **EP 3 575 655 B2**
(45) Veröffentlichungstag und Bekanntmachung des Hinweises auf die Entscheidung über den Einspruch: **14.06.2023**
(45) Hinweis auf die Patenterteilung: 09.09.2020
(21) Anmeldenummer: 18174920.1
(22) Anmeldetag: 29.05.2018
(51) Int. Cl.: F16L 3/13, B60R 16/08, B60T 17/04

(54) **ROHRLEITUNGS-BEFESTIGUNGSAGGREGAT UND VERFAHREN ZUR BEFESTIGUNG EINER ROHRLEITUNG AN EINEM BEFESTIGUNGSCLIP**
PIPE LINE FIXING UNIT AND METHOD FOR FIXING A PIPE LINE TO A FIXING CLIP
GROUPE DE FIXATION DE CONDUITE ET PROCÉDÉ DE FIXATION D'UNE CONDUITE À UN CLIP DE FIXATION

(43) Veröffentlichungstag der Anmeldung: 04.12.2019
(73) Patentinhaber: TI Automotive (Fuldabrück) GmbH, 34277 Fuldabrück (DE)
(72) Erfinder: Häckel, Andre, 34513 Waldeck (DE)
(74) Vertreter: Andrejewski - Honke Patent- und Rechtsanwälte Partnerschaft mbB

(56) Entgegenhaltungen:
- WO-A1-2019/180234
- DE-C1- 3 721 501
- GB-A- 2 269 201
- US-A1- 2003 184 073

## Beschreibung

Die Erfindung betrifft ein Rohrleitungs-Befestigungsaggregat aus zumindest einem Befestigungsclip und zumindest einer an dem Befestigungsclip fixierbaren bzw. fixierten Kraftfahrzeug-Rohrleitung. Die Erfindung betrifft fernerhin ein Verfahren zur Befestigung einer Kraftfahrzeug-Rohrleitung an einem Befestigungsclip. - Die vorstehend genannten Befestigungsclips dienen zur Befestigung einer Kraftfahrzeug-Rohrleitung in Kraftfahrzeugen. Es liegt im Rahmen der Erfindung, dass eine solche Kraftfahrzeuge-Rohrleitung mit einer Mehrzahl von Befestigungsclips über Ihre Länge befestigt wird bzw. in/an einem Kraftfahrzeug befestigt wird. Dadurch sollen unerwünschte axiale Bewegungen und Rotationsbewegungen der Kraftfahrzeug-Rohrleitung vermieden werden. Die Kraftfahrzeug-Rohrleitung ist insbesondere eine Kraftstoffleitung, eine Rohrleitung für Bremsflüssigkeiten oder eine Rohrleitung für ein fluides Temperiermedium. Andere Anwendungen der erfindungsgemäßen Kraftfahrzeug-Rohrleitung sind möglich. Bei der Kraftfahrzeug-Rohrleitung handelt es sich insbesondere um eine mehrschichte Rohrleitung, bei der eine Mehrzahl von Kunststoffschichten übereinander angeordnet sind.

Rohrleitungs-Befestigungsaggregate der vorstehend beschriebenen Art sind aus der Praxis in unterschiedlichen Ausführungsformen bekannt. Grundsätzlich ist es zunächst bekannt derartige Rohrleitungen lediglich mechanisch zu fixieren. Eine solche mechanische Fixierung ist aber in der Regel nicht ausreichend, wenn die Kraftfahrzeug-Rohrleitungen aus Kunststoffmaterial bzw. Polymermaterial bestehen. Aufgrund der Fließeigenschaften des Polymermaterials ergeben sich dann vor allem bei erwärmten bzw. erhitzten Rohrleitungen Probleme.

Es ist bereits bekannt Kraftfahrzeug-Rohrleitungen aus Kunststoffmaterial mit Befestigungselementen zu verschweißen. Hier ist es aber erforderlich, das Befestigungselement bzw. das Material des Befestigungselementes so auszuwählen, dass es mit dem Kunststoffmaterial der Kraftfahrzeug-Rohrleitung kompatibel ist bzw. verschweißbar ist. Bei Kraftfahrzeug-Rohrleitungen aus unterschiedlichen Kunststoffen bzw. mit Außenschichten aus unterschiedlichen Kunststoffen ist somit eine Mehrzahl von Befestigungselementen erforderlich um die einzelnen Kraftfahrzeug-Rohrleitungen sicher durch Verschweißen an dem Befestigungselement fixieren zu können. Das ist insbesondere im Hinblick auf die Herstellung und die Lagerung der Mehrzahl von Befestigungselementen sehr aufwendig und kostspielig. Die US 2003/0184073 A1 offenbart das Verschweißen einer kunststoffüberzogenen Bremsleitung mit einem Kunststoffbefestigungsclip mittels Ultraschallschweißen.

In der letzten Zeit hat im Übrigen die Laserverschweißung von Kunststoffkomponenten mehr und mehr an Bedeutung gewonnen. Wenn eine Kraftfahrzeug-Rohrleitung aus Kunststoff mit einem Befestigungselement bzw. Befestigungsclip aus Kunststoff verschweißt werden soll, ist es erforderlich, dass das gesamte Befestigungselement bzw. der gesamte Befestigungsclip für eine funktionssichere Laserverschweißung aus optisch transparentem Material bezüglich der Laserwellenlänge besteht. Das ist verhältnismäßig kostspielig.

Demgegenüber liegt der Erfindung das technische Problem zugrunde, ein Rohrleitungs-Befestigungsaggregat der eingangs genannten Art anzugeben, bei dem die vorstehend geschilderten Nachteile vermieden werden können und das vor allem eine einfache, wenig aufwendige und kostengünstige Befestigung einer Kraftfahrzeug-Rohrleitung an einem Befestigungsclip erlaubt. Der Erfindung liegt weiterhin das technische Problem zugrunde, ein entsprechendes Verfahren zur Befestigung einer Kraftfahrzeug-Rohrleitung an einem Befestigungsclip anzugeben.

Zur Lösung dieses technischen Problems lehrt die Erfindung ein Rohrleitungs-Befestigungsaggregat gemäß Anspruch 1.

Es liegt im Rahmen der Erfindung, dass eine Kraftfahrzeug-Rohrleitung und eine Mehrzahl von Befestigungsclips das erfindungsgemäße Rohrleitungs-Befestigungsaggregat bilden. Zweckmäßigerweise ist eine Kraftfahrzeug-Rohrleitung mit einer Mehrzahl solcher Befestigungsclips an einem Kraftfahrzeug fixiert, wobei die Befestigungsclips über die Länge der Rohrleitung verteilt angeordnet sind und vorzugsweise in konstanten bzw. im Wesentlichen konstanten Abständen voneinander angeordnet sind.

Es liegt weiterhin im Rahmen der Erfindung, dass der zumindest eine Befestigungsclip aus Kunststoff bzw. im Wesentlichen aus Kunststoff besteht. Dabei weist der Befestigungsclip zumindest ein - vorzugsweise ein - Verschweißungselement auf, das zumindest bereichsweise aus einem mit der Außenoberfläche der Rohrleitung verschweißbaren Kunststoff besteht. Gemäß einer empfohlenen Ausführungsform besteht ein Verschweißungselement vollständig bzw. im Wesentlichen vollständig aus einem mit der Außenoberfläche der Rohrleitung verschweißbaren Kunststoff.

Es liegt im Rahmen der Erfindung, dass der Befestigungsclip im Übrigen bzw. ansonsten aus einem von dem verschweißbaren Kunststoff des Verschweißungselementes unterschiedlichen Material besteht bzw. zumindest im Wesentlichen besteht. Zweckmäßigerweise besteht der Befestigungsclip zu mindestens 90 Gew.-%, vorzugsweise zu mindestens 95 Gew.-% und bevorzugt zu mindestens 98 Gew.-% aus einem von dem verschweißbaren Kunststoff des Verschweißungselementes unterschiedlichen Material und zwar empfohlenermaßen aus einem von dem verschweißbaren Kunststoff des Verschweißungselementes unterschiedlichen Kunststoff. Es empfiehlt sich, dass der gesamte Befestigungsclip (mitsamt Verschweißungselement) aus Kunststoff bzw. im Wesentlichen aus Kunststoff besteht, wobei die Art bzw. die Eigenschaften des Kunststoffes des Verschweißungselementes einerseits und des übrigen Befestigungsclips andererseits zweckmäßigerweise unterschiedlich ist.

Nach besonders empfohlener Ausführungsform der Erfindung ist das Verschweißungselement formschlüssig und/oder kraftschlüssig und nicht stoffschlüssig an dem Befestigungsclip fixiert. Zweckmäßigerweise ist das Verschweißungselement lediglich formschlüssig und/oder lediglich kraftschlüssig an dem Befestigungsclip fixiert. Dagegen wird das Verschweißungselement mit der in dem zugeordneten Befestigungsclip aufgenommenen Kraftfahrzeug-Rohrleitung verschweißt und somit stoffschlüssig verbunden.

Eine empfohlene Ausführungsform der Erfindung ist dadurch gekennzeichnet, dass das Verschweißungselement mit der Maßgabe an dem Befestigungsclip fixierbar ist bzw. fixiert ist, dass der verschweißbare Kunststoff des Verschweißungselementes zumindest bereichsweise an zumindest einer Seite des Befestigungsclips bzw. des Verschweißungselementes abdeckungsfrei bzw. ohne Zwischenschaltung weiterer Komponenten angeordnet ist. Zweckmäßigerweise handelt es sich bei der genannten Seite des Befestigungsclips bzw. des Verschweißungselementes um die der zu befestigenden Rohrleitung zugewandte Seite des Befestigungsclips bzw. des Verschweißungselementes. Dass das Verschweißungselement an der genannten Seite abdeckungsfrei und ohne Zwischenschaltung weiterer Komponenten angeordnet ist, meint im Rahmen der Erfindung insbesondere, dass das Verschweißungselement bzw. der verschweißbare Kunststoff des Verschweißungselementes unmittelbar in Kontakt mit der Außenoberfläche der Rohrleitung bringbar ist, so dass eine Verschweißung des Verschweißungselementes bzw. des verschweißbaren Bereiches des Verschweißungselementes mit der Außenoberfläche der Rohrleitung möglich ist.

Es liegt somit im Rahmen der Erfindung, dass der verschweißbare Kunststoff des Verschweißungselementes an der der Rohrleitung zugewandten ersten Seite des Befestigungsclips bzw. des Verschweißungselementes zumindest bereichsweise abdeckungsfrei bzw. ohne Zwischenschaltung weiterer Komponenten bzw. Schichten vorgesehen ist. Dadurch kann der verschweißbare Kunststoff unmittelbar in Kontakt mit der Außenoberfläche der Rohrleitung gebracht werden und problemlos mit der Außenoberfläche der Rohrleitung verschweißt werden. Gemäß einer bevorzugten Ausführungsvariante besteht der der Rohrleitung zugewandte abdeckungsfreie Bereich des Verschweißungselementes vollständig bzw. im Wesentlichen vollständig aus dem verschweißbaren Kunststoff. Eine sehr empfohlene Ausführungsform der Erfindung ist dadurch gekennzeichnet, dass das gesamte Verschweißungselement aus dem verschweißbaren Kunststoff bzw. im Wesentlichen aus dem verschweißbaren Kunststoff besteht.

Eine besonders bevorzugte Ausführungsform der Erfindung zeichnet sich dadurch aus, dass zumindest ein Bereich des Verschweißungselementes bzw. der verschweißbare Kunststoff des Verschweißungselementes zumindest bereichsweise an der der Rohrleitung zugewandten ersten Seite (Innenseite) des Befestigungsclips bzw. des Verschweißungselementes als auch an der der ersten Seite gegenüberliegenden zweiten Seite (Außenseite) des Befestigungsclips bzw. des Verschweißungselementes abdeckungsfrei bzw. ohne Zwischenschaltung weiterer Komponenten angeordnet ist. Diese Ausführungsform eignet sich ganz besonders für ein Verschweißen des Verschweißungselementes mit der Außenoberfläche der Rohrleitung. Zum einen ist das Verschweißungselement bzw. der verschweißbare Kunststoff des Verschweißungselementes unmittelbar mit der Außenoberfläche der Rohrleitung in Kontakt bringbar und zum anderen ist das Verschweißungselement bzw. der verschweißbare Kunststoff des Verschweißungselementes ohne Weiteres von der Außenseite des Befestigungsclips aus für eine Verschweißung zugänglich.

Es liegt im Rahmen der Erfindung, dass das Verschweißungselement an der der Rohrleitung zugewandten ersten Seite aus einem ersten verschweißbaren Kunststoff besteht bzw. im Wesentlichen besteht und an der der Rohrleitung abgewandten Seite aus zumindest einem bzw. aus einem zweiten Kunststoff besteht bzw. im Wesentlichen besteht. Eine Ausführungsform der Erfindung ist dadurch gekennzeichnet, dass das Verschweißungselement - insbesondere in radialer Richtung in Bezug auf die Rohrleitung - mehrschichtig ausgebildet ist, insbesondere zweischichtig ausgebildet ist. Eine besonders bevorzugte Ausführungsvariante zeichnet sich dabei dadurch aus, dass eine der Rohrleitung zugewandte Schicht bzw. eine unmittelbar mit der Rohrleitung in Kontakt bringbare Schicht des Verschweißungselementes aus dem verschweißbaren Kunststoff besteht bzw. im Wesentlichen besteht. So kann insbesondere für eine Laserverschweißung der Rohrleitung mit dem Befestigungsclip eine der Rohrleitung zugewandte bzw. unmittelbar mit der Rohrleitung in Kontakt bringbare Schicht des Verschweißungselementes aus dem verschweißbaren Kunststoff bestehen bzw. im Wesentlichen bestehen und zumindest eine weitere Schicht des Verschweißungselementes aus einem lasertransparenten Material bestehen bzw. im Wesentlichen bestehen.

Nach einer empfohlenen Ausführungsform der Erfindung ist das Verschweißungselement formschlüssig und gemäß einer Ausführungsvariante lediglich formschlüssig in einer Clipaufnahme des Befestigungsclips aufgenommen bzw. fixiert. Diese Ausführungsform zeichnet sich dadurch aus, dass das Verschweißungselement auf einfache Weise in die Clipaufnahme des Befestigungsclips einführbar ist und gemäß einer Ausführungsvariante auch wieder entnehmbar bzw. austauschbar ist. Eine bewährte Ausführungsform der Erfindung ist dadurch gekennzeichnet, dass das Verschweißungselement sowohl formschlüssig als auch kraftschlüssig in einer Clipaufnahme des Befestigungsclips aufgenommen ist bzw. fixiert ist. So kann das Verschweißungselement beispielsweise mittels einer Klemmverbindung oder dergleichen in der Clipaufnahme des Befestigungsclips fixiert sein. Es liegt auch im Rahmen der Erfindung, dass das Verschweißungselement mittels einer Rastverbindung an dem Befestigungsclip, insbesondere in einer Clipaufnahme des Befestigungsclips fixierbar ist bzw. fixiert ist.

Gemäß einer Ausführungsform ist das Verschweißungselement plattenförmig bzw. plättchenförmig ausgebildet und hat insbesondere die Form einer ebenen Platte bzw. eines ebenen Plättchens. Es ist aber auch möglich, dass das Verschweißungselement eine dreidimensionale Ausgestaltung aufweist und in diesem Zusammenhang vorzugsweise die Form einer gebogenen Platte bzw. die Form eines gebogenen Plättchens aufweist. Die Biegung des Plättchens ist dabei zweckmäßigerweise an die Form bzw. an die Wölbung einer Rohraufnahme des Befestigungsclips angepasst.

Eine sehr empfohlene Ausführungsform der Erfindung ist dadurch gekennzeichnet, dass der Befestigungsclip eine fensterartige bzw. fensterförmige Clipaufnahme aufweist, die die Wandung des Befestigungsclips durchsetzt bzw. die zwei gegenüberliegende Seiten - insbesondere die Innenseite und die Außenseite - des Befestigungsclips miteinander verbindet. Innenseite meint im Übrigen die der Rohrleitung zugwandte Seite des Befestigungsclips und Außenseite meint die der Rohrleitung abgewandte Seite des Befestigungsclips. Es liegt im Rahmen der Erfindung, dass das Verschweißungselement in der fensterartigen Clipaufnahme - insbesondere formschlüssig und/oder kraftschlüssig - fixierbar ist bzw. fixiert ist. Gemäß einer Ausführungsform der Erfindung weist die fensterartige Clipaufnahme einen rechteckförmigen Querschnitt bzw. einen im Wesentlichen rechteckförmigen Querschnitt auf. Grundsätzlich sind aber auch andere Querschnittsgestaltungen der fensterartigen Clipaufnahme denkbar. Nach Fixierung des Verschweißungselementes in der fensterartigen Clipaufnahme ist das Verschweißungselement bzw. ist der im Bereich der Fensteröffnungen angeordnete Teil des Verschweißungselementes vorzugsweise an beiden gegenüberliegenden Seiten bzw. an der Innenseite und an der Außenseite abdeckungsfrei ausgestaltet und - vor Verschweißen mit der Rohrleitung - von beiden Seiten frei zugänglich. Zweckmäßigerweise besteht zumindest der im Bereich der Fensteröffnungen von außen zugängliche Bereich des Verschweißungselementes zumindest bereichsweise aus dem mit der Außenoberfläche der Rohrleitung verschweißbaren Kunststoff. Es empfiehlt sich, dass bei dieser Ausführungsform das Verschweißungselement mit zumindest einem Randbereich an zumindest einem Rand der fensterartigen Clipaufnahme an dem Befestigungsclip fixiert ist. Nach einer bevorzugten Ausführungsform der Erfindung ist das Verschweißungselement mit zumindest zwei gegenüberliegenden Randbereichen oder über seinen gesamten Rand an dem Rand der fensterartigen Clipaufnahme fixiert. Dabei handelt es sich bevorzugt um eine formschlüssige und/oder kraftschlüssige Fixierung.

Erfindungsgemäß weist der Befestigungsclip zumindest eine Rohraufnahme auf, in der die Rohrleitung formschlüssig aufgenommen wird. Weiterhin liegt es im Rahmen der Erfindung, dass das Verschweißungselement - insbesondere die Clipaufnahme bzw. fensterartige Clipaufnahme mit dem Verschweißungselement - an der Rohraufnahme des Befestigungsclips angeordnet ist. Es empfiehlt sich, dass das Verschweißungselement bzw. der verschweißbare Kunststoff des Verschweißungselementes an der Innenseite der Rohraufnahme mit der Außenoberfläche der Rohrleitung verschweißbar ist bzw. verschweißt ist.

Erfindungsgemäß weist die Rohraufnahme einen U-förmigen Querschnitt mit zwei gegenüberliegenden U-Schenkeln und einer die U-Schenkel verbindenden U-Basis auf. Erfindungsgemäß ist das Verschweißungselement, insbesondere die Clipaufnahme bzw. die fensterartige Clipaufnahme mit dem Verschweißungselement, an der U-Basis der U-förmigen Rohraufnahme angeordnet und besonders bevorzugt im Wesentlichen an der U-Basis oder lediglich an der U-Basis angeordnet ist. Zweckmäßigerweise ist das Verschweißungselement, insbesondere die Clipaufnahme bzw. fensterartige Clipaufnahme mit dem Verschweißungselement mittig bzw. im Wesentlichen mittig an der U-Basis der Rohraufnahme vorgesehen. Gemäß einer empfohlenen Ausführungsvariante wird die fensterartige Clipaufnahme bzw. das in der fensterartigen Clipaufnahme fixierte Verschweißungselement von zwei gegenüberliegenden sich in Längsrichtung der U-Basis erstreckenden Basisabschnitten begrenzt. Diese Basisabschnitte bilden somit gleichsam zwei gegenüberliegende Ränder der fensterartigen Clipaufnahme.

Es liegt im Rahmen der Erfindung, dass die Rohrleitung im montierten bzw. verschweißten Zustand eine Befestigungsfläche der Rohraufnahme des Befestigungsclips bedeckt. Bei einer bevorzugten U-förmigen Rohraufnahme des Befestigungsclips bedeckt die Rohrleitung dabei zumindest bereichsweise die Innenseite der U-förmigen Schenkel und der U-förmigen Basis der Rohraufnahme. Zur Verschweißung mit der Außenoberfläche der Rohrleitung weist das erfindungsgemäße Verschweißungselement empfohlenermaßen eine zur Rohrleitung hin offene bzw. abdeckungsfreie Fläche auf. Diese der Rohrleitung zugewandte offene bzw. abdeckungsfreie Fläche des Verschweißungselementes beträgt zweckmäßigerweise maximal 40 %, vorzugsweise maximal 35 % und bevorzugt maximal 30 % der Befestigungsfläche, die die Rohrleitung in der Rohraufnahme insgesamt bedeckt.

Eine empfohlene Ausführungsform der Erfindung ist dadurch gekennzeichnet, dass der verschweißbare Kunststoff des Verschweißungselementes dem Kunststoff der Außenoberfläche der Rohrleitung entspricht bzw. im Wesentlichen entspricht. Wenn es sich bei der Außenoberfläche bzw. bei der Außenschicht der Rohrleitung um eine Außenoberfläche bzw. Außenschicht auf Basis eines Polyamids handelt, besteht zweckmäßigerweise auch das Verschweißungselement bzw. der verschweißbare Kunststoff des Verschweißungselementes aus einem Polyamid bzw. im Wesentlichen aus einem Polyamid und/oder aus einem mit einem Polyamid verschweißbaren Polymer. Falls es sich bei dem Material der Außenoberfläche bzw. der Außenschicht der Rohrleitung um ein Material auf Basis eines Polyolefins, insbesondere auf Basis von Polyethylen handelt, besteht vorzugsweise auch das Verschweißungselement bzw. der verschweißbare Kunststoff des Verschweißungselementes aus einem Polyolefin, insbesondere aus Polyethylen oder im Wesentlichen aus Polyolefin bzw. aus Polyethylen.

Eine besonders bevorzugte Ausführungsform der Erfindung ist dadurch gekennzeichnet, dass die an dem Befestigungsclip fixierbare Rohrleitung eine mehrschichtige Rohrleitung ist. Das Verschweißungselement bzw. der verschweißbare Kunststoff des Verschweißungselementes ist dann mit der Außenschicht der mehrschichtigen Rohrleitung verschweißbar. Vorzugsweise weist die Rohrleitung des erfindungsgemäßen Befestigungsaggregates zwei bis sechs Schichten auf, bevorzugt zwei bis fünf Schichten.

Eine ganz besonders bevorzugte Ausführungsform der Erfindung ist dadurch gekennzeichnet, dass das Verschweißungselement bzw. der verschweißbare Kunststoff des Verschweißungselementes über Laserverschweißung mit der Außenoberfläche der Rohrleitung verschweißt wird bzw. verschweißt ist. Zweckmäßigerweise wird das Verschweißungselement bzw. wird der verschweißbare Kunststoff des Verschweißungselementes mit der Außenoberfläche bzw. mit der Außenschicht der Rohrleitung laserverschweißt. Die Laserverschweißung hat sich im Hinblick auf die Lösung des technischen Problems der Erfindung besonders bewährt. In diesem Zusammenhang liegt es im Rahmen der Erfindung, dass zumindest der verschweißbare Bereich bzw. der verschweißbare Kunststoff des Verschweißungselementes aus lasertransparentem Kunststoff besteht bzw. im Wesentlichen aus lasertransparentem Kunststoff besteht. Vorzugsweise besteht das gesamte Verschweißungselement aus lasertransparentem Kunststoff bzw. im Wesentlichen aus lasertransparentem Kunststoff. Eine Ausführungsform der Erfindung ist dadurch gekennzeichnet, dass das Verschweißungselement an der der Rohrleitung zugewandten ersten Seite aus einem ersten verschweißbaren Kunststoff - insbesondere aus einem laserabsorbierenden Kunststoff - besteht bzw. im Wesentlichen besteht und an der der Rohrleitung abgewandten Seite aus zumindest einem zweiten Kunststoff, insbesondere aus zumindest einem lasertransparenten zweiten Kunststoff besteht bzw. im Wesentlichen besteht. Wie bereits oben dargelegt ist eine Ausführungsform der Erfindung dadurch gekennzeichnet, dass das Verschweißungselement - insbesondere in Bezug auf die radiale Richtung der Rohrleitung - mehrschichtig, beispielsweise zweischichtig ausgebildet ist. Dabei zeichnet sich eine Ausführungsvariante dadurch aus, dass zumindest eine bzw. eine der Rohrleitung zugewandte bzw. in Kontakt mit der Rohrleitung bringbare Schicht des Verschweißungselementes aus verschweißbarem laserabsorbierenden Kunststoff besteht bzw. im Wesentlichen besteht und zumindest eine, vorzugsweise eine weitere Schicht des Verschweißungselementes aus lasertransparentem Kunststoff besteht bzw. im Wesentlichen besteht.

Die Laserverschweißung wird im Rahmen der Erfindung besonders bevorzugt. Besondere Bedeutung kommt bei dem bevorzugten Laserschweißen der weiter oben erläuterten Ausführungsvariante mit der fensterartigen Clipaufnahme zu. Zweckmäßigerweise ist das Verschweißungselement in einer solchen fensterartigen Clipaufnahme aufgenommen, die die Wandung des Befestigungsclips durchsetzt. Vorzugsweise ist im Bereich der beiden gegenüberliegenden Fensteröffnungen dieser fensterartigen Clipaufnahme der verschweißbare Kunststoff des Verschweißungselementes angeordnet und dieser verschweißbare Kunststoff ist an seiner einen Seite in Kontakt mit der Außenoberfläche der Rohrleitung bringbar. Das Verschweißungselement ist an seiner der Rohrleitung abgewandten Seite zweckmäßigerweise zugänglich für eine Schweißapparatur, insbesondere für eine Laserschweißapparatur. Bei dieser Ausführungsvariante kann eine besonders effektive und einfache Laserverschweißung vorgenommen werden. Es wurde bereits darauf hingewiesen, dass das Verschweißungselement vorzugsweise formschlüssig und/oder kraftschlüssig in der fensterartigen Clipaufnahme des Befestigungsclips fixiert ist.

Eine empfohlene Ausführungsform der Erfindung zeichnet sich dadurch aus, dass das Verschweißungselement bereits formschlüssig und/oder kraftschlüssig an dem Befestigungsclip fixiert ist und dass in diesem Zustand das Verschweißungselement bzw. das Aggregat aus Befestigungsclips und Verschweißungselement durch Verschweißen mit der Rohrleitung verbunden wird. - Eine weitere Ausführungsform der Erfindung ist dadurch gekennzeichnet, dass zunächst lediglich das Verschweißungselement bzw. der verschweißbare Kunststoff des Verschweißungselementes mit der Rohrleitung verschweißt ist und dass der Befestigungsclip an dem bereits angeschweißten Verschweißungselement befestigbar ist, insbesondere aufschiebbar ist und/oder aufrastbar ist. Eine empfohlene Ausführungsvariante ist zusätzlich dadurch gekennzeichnet, dass der Befestigungsclip von dem angeschweißten Verschweißungselement wieder entfernbar ist, beispielsweise von dem Verschweißungselement abschiebbar ist.

Zur Lösung des erfindungsgemäßen technischen Problems lehrt die Erfindung weiterhin ein Verfahren zur Fixierung einer Kraftfahrzeug-Rohrleitung an zumindest einem Befestigungsclip gemäß Anspruch 15. Vorzugsweise erfolgt dieses Anschweißen bzw. Verschweißen des Verschweißungselementes mit der Außenoberfläche/Außenschicht der Rohrleitung mittels Laserschweißen.

Nach einer bevorzugten Ausführungsform des erfindungsgemäßen Verfahrens wird zunächst das Verschweißungselement formschlüssig und/oder kraftschlüssig an dem Befestigungsclip fixiert und danach wird die Rohrleitung an dem Befestigungsclip bzw. an dem Verschweißungselement des Befestigungsclips angeschweißt, vorzugsweise durch Laserschweißen angeschweißt. Das Verschweißungselement wird dabei empfohlenermaßen selektiv im Hinblick auf die Außenoberfläche bzw. Außenschicht der Rohrleitung ausgewählt, wobei das Verschweißungselement einen verschweißbaren Kunststoff aufweist, der mit der Außenoberfläche bzw. mit der Außenschicht der Rohrleitung verschweißbar ist.

Eine alternative Ausführungsform der Erfindung ist dadurch gekennzeichnet, dass zunächst das Verschweißungselement an der Außenoberfläche bzw. an der Außenschicht der Rohrleitung angeschweißt wird - vorzugsweise mittels Laserschweißen angeschweißt wird - und dass anschließend der (restliche) Befestigungsclip an dem angeschweißten Verschweißungselement formschlüssig und/oder kraftschlüssig fixiert wird. Das Verschweißungselement wird wiederum selektiv ausgewählt, so dass ein verschweißbarer Kunststoff des Verschweißungselementes mit der Außenoberfläche bzw. mit der Außenschicht der Rohrleitung verschweißbar ist.

Bei beiden vorstehend beschriebenen Ausführungsformen wird zweckmäßigerweise lediglich das Verschweißungselement bzw. der verschweißbare Kunststoff des Verschweißungselementes entsprechend dem Material der Außenoberfläche bzw. Außenschicht der Rohrleitung ausgewählt.

Der übrige Befestigungsclip kann im Hinblick auf sein Material unabhängig von der Beschaffenheit der Rohrleitung bzw. von der Beschaffenheit der Außenoberfläche der Rohrleitung ausgewählt werden und kann beispielsweise aus einem Standardkunststoff bestehen. Es liegt im Rahmen der Erfindung, dass das Verschweißungselement bzw. der verschweißbare Kunststoff des Verschweißungselementes aus einem lasertransparenten Kunststoff besteht bzw. im Wesentlichen besteht und dass der übrige Befestigungsclip dagegen aus einem nicht lasertransparenten Material bzw. zumindest im Wesentlichen aus einem nicht lasertransparenten Material besteht.

Der Erfindung liegt die Erkenntnis zugrunde, dass mit dem erfindungsgemäßen Rohrleitungs-Befestigungsaggregat und mit dem erfindungsgemäßen Verfahren eine sehr variable und flexible Befestigungsmöglichkeit für Rohrleitungen bzw. Kraftfahrzeug-Rohrleitungen an Befestigungsclips geschaffen wird. Die eingesetzten Befestigungsclips können unabhängig von dem Material der Rohrleitungen ausgewählt werden und lediglich das Verschweißungselement muss entsprechend eingerichtet sein. Die Befestigungsclips können dabei problemlos so ausgebildet werden, dass die entsprechend dem Material der Rohrleitung ausgewählten Verschweißungselemente auf einfache Weise formschlüssig und/oder kraftschlüssig an dem Befestigungsclip fixierbar sind. Weiterhin kann der Befestigungsclip mit seinem Verschweißungselement auf sehr einfache und sichere Weise mit der Rohrleitung verschweißt werden, insbesondere mittels Laserschweißen verschweißt werden. Die erfindungsgemäßen Befestigungsclips mit ihren jeweils ausgewählten Verschweißungselementen sind auf einfache und wenig aufwendige Weise herstellbar und sie zeichnen sich vor allem im Vergleich zu den aus dem Stand der Technik bekannten Maßnahmen durch einen geringeren Aufwand im Hinblick auf Herstellung und Lagerhaltung aus. Die gleichen Befestigungsclips (ohne Verschweißungselement) können für eine Vielzahl von unterschiedlichen Rohrleitungen mit verschiedenen Außenoberflächen eingesetzt werden. Lediglich die Verschweißungselemente müssen im Hinblick auf ihr Material auf das Material der Außenoberfläche der Rohrleitung abgestimmt werden. Da die Verschweißungselemente in der Regel deutlich kleiner sind als der übrige Befestigungsclip ergibt sich hier ein deutlich verringerter Materialaufwand im Vergleich zu den bekannten Maßnahmen. Das gilt insbesondere dann, wenn der Befestigungsclip durch Laserschweißen mit der Rohrleitung verbunden werden soll und dazu ein relativ kostspieliges lasertransparentes Kunststoffmaterial erforderlich ist. Hier muss lediglich das verhältnismäßig kleine Verschweißungselement aus lasertransparentem Kunststoff bestehen, während der restliche Befestigungsclip aus einem anderen Material bzw. aus einem anderen Kunststoff bestehen kann. Im Ergebnis zeichnet sich die Erfindung durch Einfachheit, geringen Aufwand und Kostengünstigkeit aus. Außerdem liegt der Erfindung die Erkenntnis zugrunde, dass mit dem erfindungsgemäßen Befestigungsaggregat effektiv und funktionssicher unerwünschte Bewegungen bzw. Verschiebungen der Rohrleitungen verhindert werden können, insbesondere unerwünschte axiale und radiale Bewegungen sowie Rotationsbewegungen und zwar durch eine Kombination des Formschlusses und/oder Kraftschlusses zwischen Befestigungsclip und Verschweißungselement einerseits und einem Stoffschluss zwischen dem Befestigungsclip und der Rohrleitung andererseits.

Nachfolgend wird die Erfindung anhand einer lediglich ein Ausführungsbeispiel darstellenden Zeichnung näher erläutert. Es zeigen in schematischer Darstellung:

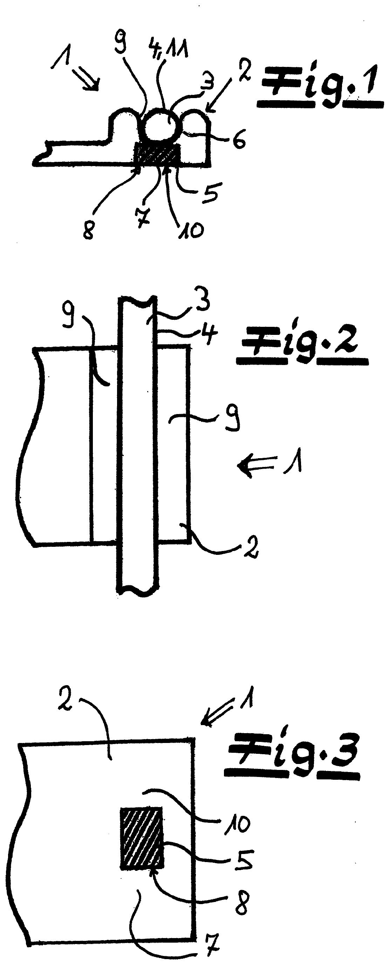

- Fig. 1: einen Schnitt durch ein erfindungsgemäßes Rohrleitungs-Befestigungsaggregat,
- Fig. 2: eine Draufsicht auf den Gegenstand nach Fig. 1 und
- Fig. 3: eine Unteransicht des Gegenstandes gemäß Fig. 1.

Die Figuren zeigen ein erfindungsgemäßes Rohrleitungs-Befestigungsaggregat 1 aus einem Befestigungsclip 2 und einer an dem Befestigungsclip 2 fixierten Kraftfahrzeug-Rohrleitung 3. Es liegt im Rahmen der Erfindung, dass die Kraftfahrzeug-Rohrleitung 3 an einer Mehrzahl von Befestigungsclips 2 der dargestellten Art fixiert ist, wobei die Befestigungsclips insbesondere in einem Kraftfahrzeug befestigt sind. Erfindungsgemäß weist die Kraftfahrzeug-Rohrleitung 3 eine Außenoberfläche 4 aus Kunststoff auf, die mit dem Befestigungsclip 2 verschweißbar ist bzw. verschweißt ist. Im Ausführungsbeispiel nach den Figuren ist erkennbar, dass der Befestigungsclip 2 mit einem Verschweißungselement 5 ausgestattet ist, das vorzugsweise und im Ausführungsbeispiel vollständig aus einem verschweißbaren Kunststoff besteht, der mit der Außenoberfläche 4 der Rohrleitung 2 verschweißt ist. Zweckmäßigerweise und im Ausführungsbeispiel handelt es sich bei der Rohrleitung 3 um eine mehrschichtige Rohrleitung 3 und das Verschweißungselement 5 ist mit der Außenschicht 11 der mehrschichtigen Rohrleitung 3 verschweißt. Im Ausführungsbeispiel besteht der übrige Befestigungsclip 2 aus einem von dem verschweißbaren Kunststoff des Verschweißungselementes 5 verschiedenen Kunststoff.

Zweckmäßigerweise und im Ausführungsbeispiel ist das Verschweißungselement 5 formschlüssig und kraftschlüssig an dem Befestigungsclip 2 fixiert. Vorzugsweise und im Ausführungsbeispiel ist der Befestigungsclip 2 zur Fixierung des Verschweißungselementes 5 mit einer fensterartigen Clipaufnahme 8 ausgestattet, die die Wandung des Befestigungsclips 2 durchsetzt bzw. die zwei gegenüberliegende Seiten, nämlich die Innenseite 6 und die Außenseite 7 des Befestigungsclips 2 miteinander verbindet. Das Verschweißungselement 5 ist vorzugsweise und im Ausführungsbeispiel formschlüssig und kraftschlüssig in der fensterartigen Clipaufnahme 8 aufgenommen. Dadurch ist das Verschweißungselement 5 an der der Rohrleitung 3 zugewandten ersten Seite bzw. Innenseite 6 des Befestigungsclips 2 abdeckungsfrei bzw. ohne Zwischenschaltung weiterer Komponenten angeordnet. Weiterhin ist das Verschweißungselement 5 bevorzugt und im Ausführungsbeispiel auch an der der ersten Seite bzw. der Innenseite 6 gegenüberliegenden zweiten Seite bzw. Außenseite 7 des Befestigungsclips 2 abdeckungsfrei bzw. ohne Zwischenschaltung weiterer Komponenten angeordnet. Aufgrund dieser Anordnung kann das Verschweißungselement 5 mit der Außenoberfläche 4 bzw. mit der Außenschicht 11 der Rohrleitung 3 zwecks Verschweißung problemlos in Kontakt gebracht werden und außerdem ist das Verschweißungselement 5 von der Außenseite 7 her problemlos für eine Verschweißung zugänglich.

Zweckmäßigerweise und im Ausführungsbeispiel sind Randbereiche des Verschweißungselementes 5 an den Rändern der fensterartigen Clipaufnahme 8 formschlüssig und kraftschlüssig fixiert. Vorzugsweise und im Ausführungsbeispiel mag der verschweißbare Kunststoff des Verschweißungselementes 5 dem Kunststoff der Außenoberfläche 4 bzw. dem Kunststoff der Außenschicht 11 der Rohrleitung 3 entsprechen, so dass eine Verschweißung des Verschweißungselementes 5 mit der Außenschicht 11 der Rohrleitung 3 problemlos möglich ist. Empfohlenermaßen und im Ausführungsbeispiel erfolgt die Verschweißung des Verschweißungselementes 5 mit der Außenschicht 11 der Rohrleitung 3 mittels Laserverschweißen. Dazu besteht bevorzugt und im Ausführungsbeispiel das Verschweißungselement 5 aus einem lasertransparenten Kunststoff und aufgrund der Anordnung in der fensterartigen Clipaufnahme 8 ist das Verschweißungselement 5 von der Außenseite 7 her für eine Laserverschweißung problemlos zugänglich.

Die erfindungsgemäße Ausgestaltung des Befestigungsaggregates 1 macht es möglich, dass lediglich das relativ kleine Verschweißungselement 5 in Bezug auf das Material der Rohrleitung 3 ausgewählt werden muss und dass der Befestigungsclip 2 ansonsten aus einem beliebigen Material bzw. Kunststoffmaterial bestehen kann. Somit kann eine aufwendige Herstellung und Lagerhaltung einer Vielzahl von verschiedenen Befestigungsclips 2 entfallen und es müssen lediglich unterschiedliche relativ kleine Verschweißungselemente 5 vorgehalten werden.

Erfindungsgemäß weist der Befestigungsclip 2 im Übrigen eine U-förmige Rohraufnahme 9 auf, in welcher die Rohrleitung 3 formschlüssig aufgenommen ist. Das Verschweißungselement 5 bzw. die fensterartige Clipaufnahme 8 mit dem Verschweißungselement 5 ist vorzugsweise und im Ausführungsbeispiel mittig an der U-Basis 10 der U-förmigen Rohraufnahme 9 angeordnet. Diese Platzierung des Verschweißungselementes 5 hat sich im Rahmen der Erfindung für eine funktionssichere Fixierung besonders bewährt.

## Patentansprüche

1. Rohrleitungs-Befestigungsaggregat (1) aus zumindest einem Befestigungsclip (2) und zumindest einer an dem Befestigungsclip (2) fixierbaren bzw. fixierten Kraftfahrzeug-Rohrleitung (3), wobei die Kraftfahrzeug-Rohrleitung (3) eine Außenoberfläche (4) aus Kunststoff aufweist, die mit dem Befestigungsclip (2) verschweißbar ist bzw. verschweißt ist,
**dadurch gekennzeichnet, dass** der Befestigungsclip (2) zumindest ein Verschweißungselement (5) aufweist, das zumindest bereichsweise aus einem verschweißbaren Kunststoff besteht, der mit der Außenoberfläche (4) der Rohrleitung (3) verschweißbar ist bzw. verschweißt ist und wobei das Verschweißungselement (5) formschlüssig und/oder kraftschlüssig an dem Befestigungsclip (2) fixierbar ist bzw. fixiert ist,
wobei der Befestigungsclip (2) zumindest eine U-förmige Rohraufnahme (9) aufweist, in welcher die Rohrleitung (3) formschlüssig aufnehmbar ist bzw. aufgenommen ist, wobei das Verschweißungselement (5) an einer U-Basis (10) der U-förmigen Rohraufnahme (9) angeordnet ist.

2. Befestigungsaggregat nach Anspruch 1, **dadurch gekennzeichnet, dass** der übrige Befestigungsclip (2) aus einem von dem verschweißbaren Kunststoff des Verschweißungselementes (5) verschiedenen Material bzw. Kunststoff besteht bzw. im Wesentlichen besteht.

3. Befestigungsaggregat nach einem der Ansprüche 1 oder 2, **dadurch gekennzeichnet, dass** zumindest ein Bereich des Verschweißungselementes (5) bzw. der verschweißbare Kunststoff des Verschweißungselementes (5) an der der Rohrleitung (3) zugewandten ersten Seite (6) des Befestigungsclips (2) bzw. des Verschweißungselementes (5) abdeckungsfrei bzw. ohne Zwischenschaltung weiterer Komponenten angeordnet ist.

4. Befestigungsaggregat nach Anspruch 3, **dadurch gekennzeichnet, dass** zumindest ein Bereich des Verschweißungselementes (5) bzw. der verschweißbare Kunststoff des Verschweißungselementes (5) an der der Rohrleitung (3) zugewandten ersten Seite (6) (Innenseite) des Befestigungclips (2) als auch an der der ersten Seite (6) gegenüberliegenden zweiten Seite (7) (Außenseite) des Befestigungsclips (2) abdeckungsfrei bzw. ohne Zwischenschaltung weiterer Komponenten angeordnet ist.

5. Befestigungsaggregat nach einem der Ansprüche 1 bis 4, **dadurch gekennzeichnet, dass** das Verschweißungselement (5) formschlüssig, insbesondere lediglich formschlüssig in einer Clipaufnahme (8) des Befestigungsclips (2) aufgenommen ist bzw. fixiert ist.

6. Befestigungsaggregat nach einem der Ansprüche 1 bis 5, **dadurch gekennzeichnet, dass** das Verschweißungselement (5) mittels einer Rastverbindung an dem Befestigungsclip (2), insbesondere in einer Clipaufnahme (8) des Befestigungsclips (2) fixierbar ist bzw. fixiert ist.

7. Befestigungsaggregat nach einem der Ansprüche 1 bis 6, **dadurch gekennzeichnet, dass** der Befestigungsclip (2) eine fensterartige Clipaufnahme (8) aufweist, die die Wandung des Befestigungsclips (2) durchsetzt bzw. die zwei gegenüberliegende Seiten (6, 7) - insbesondere Innenseite (6) und Außenseite (7) - des Befestigungsclips (2) miteinander verbindet, wobei das Verschweißungselement (5) in der fensterartigen Clipaufnahme (8) - insbesondere formschlüssig und/oder kraftschlüssig - fixierbar ist bzw. fixiert ist.

8. Befestigungsaggregat nach einem der Ansprüche 1 bis 7, **dadurch gekennzeichnet, dass** die Rohrleitung (3) im montierten bzw. verschweißten Zustand eine Befestigungsfläche der Rohraufnahme (9) bedeckt und dass die zur Rohrleitung (3) hin offene bzw. abdeckungsfreie Fläche des Verschweißungselementes (5) maximal 40 %, vorzugsweise maximal 35 % und bevorzugt maximal 30 % der Befestigungsfläche beträgt.

9. Befestigungsaggregat nach einem der Ansprüche 1 bis 8, **dadurch gekennzeichnet, dass** der verschweißbare Kunststoff des Verschweißungselementes (5) dem Kunststoff der Außenoberfläche (4) der Rohrleitung (3) entspricht bzw. im Wesentlichen entspricht.

10. Befestigungsaggregat nach einem der Ansprüche 1 bis 9, **dadurch gekennzeichnet, dass** die Rohrleitung (3) eine mehrschichtige Rohrleitung (3) ist und dass das Verschweißungselement (5) mit der Außenschicht (11) der mehrschichtigen Rohrleitung (3) verschweißbar ist.

11. Befestigungsaggregat nach einem der Ansprüche 1 bis 10, **dadurch gekennzeichnet, dass** das Veschweißungselement (5) mit der Außenoberläche (4) bzw. mit der Außenschicht (11) der Rohrleitung (3) mittels Laserschweißen verschweißbar ist.

12. Befestigungsaggregat nach einem der Ansprüche 1 bis 11, **dadurch gekennzeichnet, dass** zumindest der verschweißbare Bereich bzw. der verschweißbare Kunststoff des Verschweißungselementes (5) aus lasertransparentem Kunststoff besteht bzw. im Wesentlichen besteht.

13. Befestigungsaggregat nach einem der Ansprüche 1 bis 12, **dadurch gekennzeichnet, dass** das Verschweißungselement (5) mehrschichtig - beispielsweise zweischichtig - ausgebildet ist und dass eine der Rohrleitung (3) zugewandte Schicht des Verschweißungselementes (5) aus dem verschweißbaren Kunststoff besteht bzw. im Wesentlichen besteht.

14. Befestigungsaggregat nach einem der Ansprüche 1 bis 13, **dadurch gekennzeichnet, dass** das Verschweißungselement (5) mit der Rohrleitung (3) verschweißt ist und der Befestigungsclip (2) an dem angeschweißten Verschweißungselement (5) befestigbar ist, insbesondere auf das angeschweißte Verschweißungselement (5) aufschiebbar ist und/oder aufrastbar ist und nach einer Ausführungsform von dem Verschweißungselement (5) wieder entfernbar ist.

15. Verfahren zur Fixierung einer Kraftfahrzeug-Rohrleitung (3) an zumindest einem Befestigungsclip (2), wobei der Befestigungsclip (2) zumindest eine U-förmige Rohraufnahme (9) aufweist, in welcher die Rohrleitung (3) formschlüssig aufgenommen wird, wobei das Verschweißungselement (5) an einer U-Basis (10) der U-förmigen Rohraufnahme (9) angeordnet ist, wobei die Kraftfahrzeug-Rohrleitung (3) eine Außenoberfläche (4) bzw. eine Außenschicht (11) aus Kunststoff aufweist, die mit dem Befestigungsclip (2) verschweißt wird, **dadurch gekennzeichnet, dass** ein Befestigungsclip (2) eingesetzt wird, der zumindest ein Verschweißungselement (5) aufweist, das zumindest bereichsweise aus einem mit der Außenoberfläche (4) bzw. mit der Außenschicht (11) der Rohrleitung (3) verschweißbaren Kunststoff besteht und dass das an dem Befestigungsclip (2) formschlüssig und/oder kraftschlüssig fixierte Verschweißungselement (5) an der Außenoberfläche (4) bzw. an der Außenschicht (11) der Rohrleitung (3) angeschweißt wird und zwar vorzugsweise mittels Laserschweißen angeschweißt wird.

16. Verfahren nach Anspruch 15, **dadurch gekennzeichnet, dass** zunächst das Verschweißungselement (5) formschlüssig und/oder kraftschlüssig an dem Befestigungsclip (2) fixiert wird und dass danach die Rohrleitung (3) an dem Befestigungsclip (2) bzw. an dem Verschweißungselement (5) des Befestigungsclips (2) angeschweißt wird, vorzugsweise durch Laserschweißen angeschweißt wird.

17. Verfahren nach Anspruch 15, **dadurch gekennzeichnet, dass** zunächst das Verschweißungselement (5) an der Außenoberfläche (4) bzw. an der Außenschicht (11) der Rohrleitung (3) angeschweißt wird - vorzugsweise durch Laserschweißen angeschweißt wird - und dass anschließend der (restliche) Befestigungsclip (2) an dem angeschweißten Verschweißungselement (5) formschlüssig und/oder kraftschlüssig fixiert wird.

## Claims

1. A pipeline fastening assembly (1) comprised of at least one fastening clip (2) and at least one motor vehicle pipeline (3) fixable or fixed to the fastening clip (2), wherein the motor vehicle pipeline (3) has an outer surface (4) made of plastic, which is weldable or welded with the fastening clip (2),
**characterized in that** the fastening clip (2) has at least one welding element (5), at least areas of which consist of a weldable plastic that is weldable or welded with the outer surface (4) of the pipeline (3), and wherein the welding element (5) is positively and/or non-positively fixable or fixed on the fastening clip (2),
wherein the fastening clip (2) has at least one U-shaped pipeline receptacle (9), in which the pipeline (3) is positively receivable or received, wherein the welding element (5) is arranged on a U-base (10) of the U-shaped pipeline receptacle (9).

2. The fastening assembly according to claim 1, **characterized in that** the remaining fastening clip (2) consists or essentially consists of a material or plastic different from the weldable plastic of the welding element (5).

3. The fastening assembly according to one of claims 1 or 2, **characterized in that** at least one area of the welding element (5) or the weldable plastic of the welding element (5) is arranged on the first side (6) of the fastening clip (2) or welding element (5) facing the pipeline (3) without a cover or without interspersing additional components.

4. The fastening assembly according to claim 3, **characterized in that** at least one area of the welding element (5) or the weldable plastic of the welding element (5) is arranged on the first side (6) (interior side) of the fastening clip (2) facing the pipeline (3) as well as on the second side (7) (exterior side) of the fastening clip (2) lying opposite the first side (6) without a cover or without interspersing additional components.

5. The fastening assembly according to one of claims 1 to 4, **characterized in that** the welding element (5) is positively, in particular only positively, received or fixed in a clip receptacle (8) of the fastening clip (2) .

6. The fastening assembly according to one of claims 1 to 5, **characterized in that** the welding element (5) is fixable or fixed by means of a latching connection on the fastening clip (2), in particular in a clip receptacle (8) of the fastening clip (2).

7. The fastening assembly according to one of claims 1 to 6, **characterized in that** the fastening clip (2) has a windowlike clip receptacle (8), which penetrates through the wall of the fastening clip (2) or joins together the two opposing sides (6, 7)-in particular the interior side (6) and exterior side (7)-of the fastening clip (2), wherein the welding element (5) is-in particular positively and/or non-positively-fixable and/or fixed in the windowlike clip receptacle (8).

8. The fastening assembly according to one of claims 1 to 7, **characterized in that** the pipeline (3) covers a fastening surface of the pipeline receptacle (9) in the mounted or welded state, and that the surface of the welding element (5) that is open or has no cover toward the pipeline (3) measures at most 40%, preferably at most 35%, and primarily at most 30% of the fastening surface.

9. The fastening assembly according to one of claims 1 to 8, **characterized in that** the weldable plastic of the welding element (5) corresponds or essentially corresponds to the plastic of the outer surface (4) of the pipeline (3).

10. The fastening assembly according to one of claims 1 to 9, **characterized in that** the pipeline (3) is a multilayer pipeline (3), and that the welding element (5) can be welded with the outer layer (11) of the multilayer pipeline (3).

11. The fastening assembly according to one of claims 1 to 10, **characterized in that** the welding element (5) can be welded with the outer surface (4) or outer layer (11) of the pipeline (3) via laser welding.

12. The fastening assembly according to one of claims 1 to 11, **characterized in that** at least the weldable area or weldable plastic of the welding element (5) consists or essentially consists of laser-transparent plastic.

13. The fastening assembly according to one of claims 1 to 12, **characterized in that** the welding element (5) is multilayered-for example, two-layered-in design, and that a layer of the welding element (5) facing the pipeline (3) consists or essentially consists of the weldable plastic.

14. The fastening assembly according to one of claims 1 to 13, **characterized in that** the welding element (5) is welded with the pipeline (3) and the fastening clip (2) can be fastened to the welded on welding element (5), in particular slipped and/or latched onto the welded on welding element (5), and in one embodiment can again be removed from the welding element (5).

15. A method for fixing a motor vehicle pipeline (3) on at least one fastening clip (2), wherein the fastening clip (2) has at least one U-shaped pipeline receptacle (9), in which the pipeline (3) is positively received, wherein the welding element (5) is arranged on a U-base (10) of the U-shaped pipeline receptacle (9), wherein the motor vehicle pipeline (3) has an outer surface (4) or an outer layer (11) made of plastic, which is welded with the fastening clip (2), **characterized in that** use is made of a fastening clip (2) having at least one welding element (5), at least areas of which consist of a plastic weldable with the outer surface (4) or with the outer layer (11) of the pipeline (3), and that the welding element (5) positively and/or non-positively fixed on the fastening clip (2) is welded onto the outer surface (4) or onto the outer layer (11) of the pipeline (3), preferably via laser welding.

16. The method according to claim 15, **characterized in that** the welding element (5) is initially positively and/or non-positively fixed on the fastening clip (2), and that the pipeline (3) is thereafter welded onto the fastening clip (2) or onto the welding element (5) of the fastening clip (2), preferably via laser welding.

17. The method according to claim 15, **characterized in that** the welding element (5) is initially welded onto the outer surface (4) or onto the outer layer (11) of the pipeline (3)-preferably via laser welding-and that the (remaining) fastening clip (2) is subsequently positively and/or non-positively fixed on the welded on welding element (5).

## Revendications

1. Ensemble de fixation de conduite (1) composé d'au moins une pince de fixation (2) et d'au moins une conduite de véhicule automobile (3) fixée ou pouvant être fixée sur la pince de fixation (2), sachant que la conduite de véhicule automobile (3) comporte une surface extérieure (4) en matière plastique, qui peut être soudée ou est soudée à la pince de fixation (2),
**caractérisé en ce que** la pince de fixation (2) comporte au moins un élément de soudage (5), qui est composé au moins par secteur d'une matière plastique soudable, qui peut être soudée ou est soudée à la surface extérieure (4) de la conduite (3) et sachant que l'élément de soudage (5) peut être fixé ou est fixé à la pince de fixation (2) par conformité de forme et/ou de force,
sachant que la pince de fixation (2) comporte au moins un logement tubulaire (9) en forme de U dans lequel la conduite (3) peut être logée ou est logée par conformité de forme, sachant que l'élément de soudage (5) est disposé sur une base en U (10) du logement tubulaire (9) en forme de U.

2. Ensemble de fixation selon la revendication 1, **caractérisé en ce que** la pince de fixation restante (2) est composée ou pour l'essentiel composée d'un matériau ou de matière plastique différents de la matière plastique soudable de l'élément de soudage (5).

3. Ensemble de fixation selon l'une quelconque des revendications 1 ou 2, **caractérisé en ce qu'**au moins une zone de l'élément de soudage (5) ou de la matière plastique soudable de l'élément de soudage (5) est disposée sur le premier côté (6) tourné vers la conduite (3) de la pince de fixation (2) ou de l'élément de soudage (5) sans couverture ou sans intercaler d'autres composants.

4. Ensemble de fixation selon la revendication 3, **caractérisé en ce qu'**au moins une zone de l'élément de soudage (5) ou de la matière plastique soudable de l'élément de soudage (5) est disposée sur le premier côté (6) (côté intérieur) tourné vers la conduite (3) de la pince de fixation (2) aussi bien que sur le deuxième côté (7) (côté extérieur) opposé au premier côté (6) de la pince de fixation (2), sans couverture ou sans intercaler d'autres composants.

5. Ensemble de fixation selon l'une quelconque des revendications 1 à 4, **caractérisé en ce que** l'élément de soudage (5) est logé ou fixé par conformité de forme, en particulier uniquement par conformité de forme, dans un logement de pince (8) de la pince de fixation (2).

6. Ensemble de fixation selon l'une quelconque des revendications 1 à 5, **caractérisé en ce que** l'élément de soudage (5) peut être fixé ou est fixé au moyen d'un raccord à crans à la pince de fixation (2), en particulier dans un logement de pince (8) de la pince de fixation (2).

7. Ensemble de fixation selon l'une quelconque des revendications 1 à 6, **caractérisé en ce que** la pince de fixation (2) comporte un logement de pince de type fenêtre (8) qui traverse la paroi de la pince de fixation (2) ou relie entre eux les deux côtés opposés (6, 7), en particulier le côté intérieur (6) et le côté extérieur (7), de la pince de fixation (2), sachant que l'élément de soudage (5) peut être fixé ou est fixé dans le logement de pince (8) de type fenêtre, en particulier par conformité de forme et/ou de force.

8. Ensemble de fixation selon l'une quelconque des revendications 1 à 7, **caractérisé en ce que** la conduite (3) couvre à l'état monté ou soudé une surface de fixation du logement tubulaire (9) et **en ce que** la surface ouverte vers la conduite (3) ou sans couverture de l'élément de soudage (5) représente au maximum 40 %, de préférence au maximum 35 % et de préférence encore au maximum 30 % de la surface de fixation.

9. Ensemble de fixation selon l'une quelconque des revendications 1 à 8, **caractérisé en ce que** la matière plastique soudable de l'élément de soudage (5) correspond ou correspond pour l'essentiel à la matière plastique de la surface extérieure (4) de la conduite (3) .

10. Ensemble de fixation selon l'une quelconque des revendications 1 à 9, **caractérisé en ce que** la conduite (3) est une conduite (3) multicouches et **en ce que** l'élément de soudage (5) peut être soudé à la couche extérieure (11) de la conduite multicouches (3).

11. Ensemble de fixation selon l'une quelconque des revendications 1 à 10, **caractérisé en ce que** l'élément de soudage (5) peut être soudé au moyen du soudage au laser à la surface extérieure (4) ou à la couche extérieure (11) de la conduite (3).

12. Ensemble de fixation selon l'une quelconque des revendications 1 à 11, **caractérisé en ce qu'**au moins la zone soudable ou la matière plastique soudable de l'élément de soudage (5) est composée ou pour l'essentiel composée de matière plastique transparente au laser.

13. Ensemble de fixation selon l'une quelconque des revendications 1 à 12, **caractérisé en ce que** l'élément de soudage (5) est constitué en plusieurs couches, par exemple en deux couches, et **en ce qu'**une couche tournée vers la conduite (3) de l'élément de soudage (5) est composée ou pour l'essentiel composée de la matière plastique soudable.

14. Ensemble de fixation selon l'une quelconque des revendications 1 à 13, **caractérisé en ce que** l'élément de soudage (5) est soudé à la conduite (3) et la pince de fixation (2) peut être fixée à l'élément de soudage (5) soudé, peut être en particulier enfilé et/ou enclenché sur l'élément de soudage (5) soudé et à nouveau enlevé de l'élément de soudage (5) selon une forme d'exécution.

15. Procédé de fixation d'une conduite de véhicule automobile (3) à au moins une pince de fixation (2), sachant que la pince de fixation (2) comporte au moins un logement tubulaire (9) en forme de U dans lequel la conduite (3) est logée par conformité de forme, sachant que l'élément de soudage (5) est disposé sur une base en U (10) du logement tubulaire (9) en forme de U, sachant que la conduite de véhicule automobile (3) comporte une surface extérieure (4) ou une couche extérieure (11) en matière plastique, qui est soudée à la pince de fixation (2), **caractérisé en ce qu'**une pince de fixation (2) est utilisée, qui comporte au moins un élément de soudage (5), qui est composé au moins par secteur d'une matière plastique soudable à la surface extérieure (4) ou à la couche extérieure (11) de la conduite (3) et **en ce que** l'élément de soudage (5) fixé par conformité de forme et/ou de force à la pince de fixation (2) est soudé à la surface extérieure (4) ou à la couche extérieure (11) de la conduite (3) et est à vrai dire de préférence soudé au moyen du soudage au laser.

16. Procédé selon la revendication 15, **caractérisé en ce que** d'abord l'élément de soudage (5) est fixé par conformité de forme et/ou de force à la pince de fixation (2) et **en ce qu'**après la conduite (3) est soudée à la pince de fixation (2) ou à l'élément de soudage (5) de la pince de fixation (2), est soudée de préférence par soudage au laser.

17. Procédé selon la revendication 15, **caractérisé en ce que** d'abord l'élément de soudage (5) est soudé sur la surface extérieure (4) ou sur la couche extérieure (11) de la conduite (3), est soudé de préférence par soudage au laser, et **en ce qu'**ensuite la pince de fixation (2) (restante) est fixée par conformité de forme et/ou de force à l'élément de soudage (5) soudé.
